# EUROPÄISCHE PATENTSCHRIFT

(11) **EP 3 927 985 B1**
(45) Veröffentlichungstag und Bekanntmachung des Hinweises auf die Patenterteilung: **17.01.2024**
(21) Anmeldenummer: 20706479.1
(22) Anmeldetag: 20.02.2020
(51) Int. Cl.: F16C 33/60, F16C 35/067

(54) **VERFAHREN UND VORRICHTUNG ZUM AUSTAUSCH EINES GEBRAUCHTEN LAGERS, INSBESONDERE ZUM AUSTAUSCH EINES HAUPTLAGERS EINER WINDKRAFTANLAGE, SOWIE LAGERANORDNUNG INSBESONDERE EINER WINDKRAFTANLAGE**
METHOD AND APPARATUS TO REPLACE A USED BEARING, IN PARTICULAR TO REPLACE THE MAIN BEARING OF A WINDMILL, AS WELL AS BEARING ARRANGEMENT, IN PARTICULAR OF A WINDMILL
PROCEDE ET APPAREIL DE REMPLACEMENT D'UN ROULEMENT, EN PARTICULIER POUR REMPLACER UN ROULEMENT D'UNE ÉOLIENNE, AINSI QU'UN ASSEMBLAGE DE ROULEMENT, EN PARTICULIER D'UNE EOLIENNE

(30) Priorität: 22.02.2019 DE 102019202449
(43) Veröffentlichungstag der Anmeldung: 29.12.2021
(73) Patentinhaber: Eolotec GmbH, 90429 Nürnberg (DE)
(72) Erfinder: PURUCKER, Michael, 91083 Baiersdorf (DE)
(74) Vertreter: FDST Patentanwälte
(86) Internationale Anmeldenummer: PCT/EP2020/054532
(87) Internationale Veröffentlichungsnummer: WO 2020/169762

(56) Entgegenhaltungen:
- EP-A1- 1 426 639
- EP-A1- 3 333 439
- DE-A1-102009 032 174
- DE-U1-202004 020 317

## Beschreibung

Die Erfindung betrifft ein Verfahren sowie eine Vorrichtung zum Austausch eines gebrauchten Lagers durch ein neues Lager, insbesondere zum Austausch eines Großlagers, wie das Hauptlager einer Windkraftanlage. Die Erfindung betrifft weiterhin eine Lageranordnung einer Windkraftanlage.

Unter Großlager werden vorliegend allgemein Lager verstanden, die für hohe Traglasten beispielsweise von mehreren Tonnen ausgebildet sind und typischerweise einen Durchmesser >0,5 m und bevorzugt bis etwa 1m aufweisen.

In den letzten Jahren hat die Windkraft eine rasante Entwicklung mit zahlreichen Technologiesprüngen hinsichtlich Leistung und Anlagendesign erlebt. Aufgrund immer kürzerer Entwicklungszyklen wurden bestehende Konzepte oftmals für die nächste Leistungsklasse lediglich nach oben skaliert. Im Bereich des Antriebsstrangs ist hier besonders die Rotorlagerung, also die Lagerung einer Rotorwelle, von der Skalierung betroffen. Die am meisten verbreitete Rotorlagerung ist die sogenannte 3-Punktlagerung, die bereits bei kleinen Anlagen < 500kW breite Anwendung fand. Die Dreipunktlagerung zeichnet sich durch sehr geringen Wälzlagerkosten und einfache Montageausführung aus. Die Wälzlagerung des Getriebes, insbesondere der ersten Getriebestufe stellt das zweite Rotorlager dar und leitet die Windlasten über die Drehmomentenstützen des Getriebes in den Maschinenträger. Nachteilig an dieser Rotorlagerlösung ist die starke Beeinflussung des Getriebes durch Reaktionskräfte und Verformungen, die über die Rotorlagerung eingeleitet werden. Zusätzlich führen bei Pendelrollenlagern bauartbedingte geometrische Gegebenheiten zu einer ungünstigen Lastverteilung und Lagerkinematik, was wiederum zu frühzeitigen Schäden im Rotorlager führt. Insbesondere mit der zunehmenden Skalierung dieser Lösung für größere Leistungsklassen, kann eine zunehmende Häufung von Lagerschäden beobachtet werden.

Weiterhin gibt es Rotorlagerkonzepte wie beispielsweise die sogenannte "aufgelöste Lagerung", wo statt der zweiten Lagerung in der ersten Getriebestufe zwei Pendelrollenlager oder ein zweireihiges Kegelrollenlager mit zusätzlichem Zylinderrollenlager eingesetzt werden. Auch bei diesen Lagerausführungen können aufgrund geometrischer Gegebenheiten, ungünstiger Lastverteilung und Lagerkinematik frühzeitige Schäden auftreten.

Muss ein beschädigtes Rotorlager einer Dreipunktlagerung oder einer aufgelösten Lagerung ausgetauscht werden, ist dies nach dem aktuellen Stand der Technik mit einem sehr hohen finanziellen und zeitlichen Aufwand verbunden. Da die Integration der zweiten Lagerung im Getriebe eine einfache Demontage des Lagers auf der Windkraftanlage nicht zulässt, muss die Rotorwelle incl. des gesamten Getriebes demontiert werden. Hierfür muss der gesamte Rotorstern demontiert werden. Unter Rotorstern wird dabei die sogenannte Rotornabe mit den Rotorblättern verstanden. Die Rotornabe ist endseitig an der Rotorwelle befestigt. Anschließend wird die Rotorlagerung incl. Getriebe in einer geschützten Umgebung (Fertigungshalle) demontiert. Nach der Demontage wird die neue Rotorlagerung wieder mit dem Getriebe verbunden und zurück zur Windkraftanlage transportiert. Während dieses Reparaturvorganges steht ein Kran an der Windkraftanlage, insofern keine zweite bereits fertig vormontierte Rotorlager-Getriebeeinheit im Rahmen eines Ringtausches vorhanden ist.

Bei der aufgelösten Lagerung kann oftmals das Getriebe auf der Gondel verbleiben, und lediglich die Rotorwelle mit dem Rotorstern muss demontiert werden. Das ist vor dem Hintergrund des zunehmenden Einsatzes in Offshore Anwendungen jedoch ebenfalls sehr aufwendig. Zur Demontage wird ein entsprechendes Wartungsschiff incl. Kran benötigt, was zu erheblichen Kosten und technischen Risiken führt.

Das Lager ist allgemein in einem sogenannten Lagergehäuse angeordnet, welches wiederum an einem Maschinenträger befestigt ist. Zur Vereinfachung der Erstmontage ist aus der DE 10 2004 058 905 A1 bekannt, das Lagergehäuse als geteiltes Lagergehäuse auszubilden, wobei zunächst ein Gehäuseunterteil angeordnet wird und anschließend das Lager mit mehreren Außenringsegmenten montiert wird, bevor schließlich ein Gehäuseoberteil auf das Gehäuseunterteil aufgesetzt wird. Gehäuseunterteil und Gehäuseoberteil weisen jeweils einen radial abstehenden Flansch auf, über den sie miteinander verbunden sind.

Aus der DE 10 2014 209 399 A1 ist weiterhin ein einteiliges Lagergehäuse zu entnehmen, welches an einer Seite einen verstellbaren Längsspalt aufweist. Hierdurch kann das Lagergehäuse für einen Austausch eines Pendelrollenlagers etwas geweitet werden. Hierzu wird das Pendelrollenlager in axialer Richtung aus dem Lagergehäuse herausgeschoben und anschließend aufgrund einer Segmentierung des Pendelrollenlagers kann dieses von der Rotorwelle entfernt werden.

Aus der EP 3 333 439 A1 ist der Austausch eines gebrauchten Lagers insbesondere einer Windkraftanlage ohne Demontage des Rotors zu entnehmen. Hierzu werden das gebrauchte Lager sowie das gebrauchte Lagergehäuse zunächst geteilt und von der Rotorwelle entfernt und anschließend durch ein in Umfangsrichtung geteiltes neues Lager sowie ein in Umfangsrichtung geteiltes neues Lagergehäuse ersetzt.

Aus der DE 20 2004 020 317 U1 ist eine Halteeinrichtung für eine Rotorwelle zu entnehmen, die zwischen einem Lager und einem Getriebe angeordnet ist und die die Rotorwelle an einer vorbestimmten Position hält.

Aus der EP 1 426 639 A1 ist ein Verfahren zur Montage eines Lagers einer Windkraftanlage mit geteilten Lagerringen zu entnehmen.

Ausgehend hiervon liegt der Erfindung die Aufgabe zugrunde, einen weiter vereinfachten Austausch eines gebrauchten Lagers, insbesondere Großlagers, wie beispielsweise das Hauptlager einer Windkraftanlage, zu ermöglichen. Insbesondere soll der Austausch kostengünstig ohne Demontage der Rotorwelle und des Rotorsterns erfolgen. D.h. die Rotorwelle verbleibt während des Austausches in ihrer Einbaulage, die sie im Betrieb einnimmt. Allenfalls wird die Rotorwelle etwas angehoben.

Die Aufgabe wird gemäß der Erfindung gelöst durch ein Verfahren zum Austausch eines gebrauchten Lagers durch ein neues Lager gemäß Anspruch 1, durch eine Lageranordnung gemäß Anspruch 14 sowie durch eine Vorrichtung gemäß Anspruch 15. Bevorzugte Ausgestaltungen und Weiterbildungen sind in den Unteransprüchen enthalten. Die im Hinblick auf das Verfahren angeführten Vorteile und bevorzugten Ausgestaltungen sind sinngemäß auch auf die Lageranordnung sowie die Vorrichtung anzuwenden.

Für den Austausch ist erfindungsgemäß gemäß einem ersten Aspekt als entscheidender Unterschied gegenüber der EP 3 333 439 A1 vorgesehen, dass das gebrauchte Lagergehäuse beibehalten und für das neue Lager wiederverwendet wird. Entsprechend ist vorgesehen, dass das gebrauchte Lagergehäuse lediglich axial relativ zum gebrauchten Lager verschoben und dadurch von diesem Entfernt wird. Das Lagergehäuse wird dabei vom gebrauchten Lager entweder abgezogen oder abgedrückt. Das gebrauchte Lager wird dann geteilt und von der Rotorwelle entfernt, bevor es durch ein in Umfangsrichtung geteiltes, neues Lager ersetzt wird und in dem gebrauchten, bisherigen Lagergehäuse aufgenommen wird.

Sofern es sich bei dem gebrauchten Lager um ein bereits geteiltes Lager handelt, kann dieses zerstörungsfrei entfernt werden. In bevorzugter Alternative erfolgt ein Zerstören des Lagers durch Trennschweißen, Sprengen, Sägen, Drahterrodieren etc., insbesondere bei einem nicht geteilten Lager.

Zur Montage und Demontage ist eine insbesondere als Traverse ausgebildete Haltevorrichtung vorgesehen, welche temporär an einem feststehenden Träger, insbesondere einem sogenannten Maschinenträger befestigt wird und die Rotoreinheit während des Austauschs hält. Zur Rotoreinheit, kurz auch als Rotor bezeichnet, zählen insbesondere die Rotorwelle, eine Rotornabe und sonstige Bauteile, die mit der Rotorwelle insbesondere fest (mittelbar oder unmittelbar) verbunden sind. Zur Rotoreinheit zählt insbesondere auch der sogenannte Rotorstern. Auch eine sogenannte Rotorlockscheibe zählt zur Rotoreinheit.

Die Haltevorrichtung stützt die Rotoreinheit, insbesondere die Rotorwelle bevorzugt zwischen der Rotornabe / dem Rotorstern und dem Lager / dem Lagersitz für das Lager ab. Allgemein erfolgt die Abstützung, also die Einleitung der Kräfte in die Haltevorrichtung, hierbei in Axialrichtung (in Richtung zur Rotornabe betrachtet) nach dem Lagersitz. Dadurch sind die einwirkenden (Gewichts-)Kräfte besser abgestützt und die Belastung für die Haltevorrichtung ist geringgehalten. Die Haltevorrichtung ist daher mit der Rotoreinheit zur Übernahme der Kräfte im Bereich zwischen dem Lagersitz und der Rotornabe zumindest temporär verbunden.

Die Traverse selbst ist allgemein an einem feststehenden Teil, insbesondere am Maschinenträger befestigt. Die Befestigung am feststehenden Teil ist in Axialrichtung vorzugsweise ebenfalls hinter dem Lagersitz, kann jedoch auch davor sein.

Zum Austausch des gebrauchten Lagers gemäß dem ersten Aspekt, insbesondere zum Austausch eines gebrauchten Großlagers, speziell zum Austausch eines Hauptlagers einer Windkraftanlage, werden dabei folgende Schritte durchgeführt:
- Das gebrauchte Lager ist im Betrieb an einem Lagersitz angeordnet und lagert eine Rotorwelle einer Rotoreinheit, wobei sich die Rotorwelle entlang einer Rotationsachse und in einer Axialrichtung zu einem vorderen, nabenseitigen Ende, also in Richtung zu einer Rotornabe, erstreckt. Die Rotorwelle ist mit ihrem rückwärtigen Ende typischerweise mit einem Getriebe verbunden und vorzugsweise in diesem, insbesondere in einer ersten Getriebestufe gelagert. Das gebrauchte Lager ist dabei in einem Lagergehäuse angeordnet, welches an einem Maschinenträger befestigt ist.
- Der Austausch des gebrauchten Lagers erfolgt ohne Demontage der Rotorwelle, d.h. diese verbleibt während des Austausches in ihrer Einbaulage, die sie im Betrieb einnimmt. Allenfalls wird sie geringfügig beispielsweise im Bereich von wenigen cm versetzt, insbesondere angehoben.
- Zum Austausch wird das Lagergehäuse in Richtung der Rotationsachse und bevorzugt entgegen der Axialrichtung, also nach hinten, vom gebrauchten Lager abgezogen oder abgedrückt.
- Das hierdurch zugänglich gemachte gebrauchte Lager wird geteilt und von der Rotorwelle entfernt.
- Das neue Lager wird um die Rotorwelle angebracht, wobei das neue Lager in Umfangsrichtung in mehrere Lagerringsegmente unterteilt ist. Das neue Lager wird wieder im (alten) Lagergehäuse angeordnet. Am Ende des Austausches ist das neue Lager am vorgesehen Lagersitz innerhalb des alten Lagergehäuses angeordnet.

Bei dem Lagergehäuse handelt es sich um ein einstückiges, nicht geteiltes Lagergehäuse. Dieses umschließt daher das Lager vollumfänglich um 360°, weist also einen einstückigen, insbesondere monolithischen ringförmigen Bereich auf, in dem das Lager im Betrieb angeordnet ist. Unter nicht geteiltes Lagergehäuse wird ein Lagergehäuse verstanden, welches nicht zerstörungsfrei teilbar ist. Das Lagergehäuse weist weiterhin typischerweise zwei radial abstehende Befestigungsflansche auf, die gegenüberliegend angeordnet sind. Mit diesen liegt das Lagergehäuse auf dem Maschinenträger, insbesondere auf randseitigen Abstützbereichen des Maschinenträgers auf. Der Maschinenträger ist dabei - zumindest im Bereich des Lagers - üblicherweise halbschalenartig ausgebildet, wobei innerhalb der schalenartigen Ausnehmung das Lager und das Lagergehäuse eingetaucht sind. Unter halbschalenartig wird allgemein eine Ausgestaltung verstanden, bei der der Maschinenträger im Querschnitt betrachtet in einem Mittenbereich eine Aufnahme aufweist, die seitlich von den randseitigen Abstützbereichen begrenzt ist. Die Querschnittskontur des Maschinenträgers kann dabei rechteckförmig (U-förmig) oder auch zumindest bereichsweise bogenförmig sein. Die Kontur, also beispielsweise der Radius der halbschalenartigen Ausnehmung des Maschinenträgers ist dabei in einigen Varianten an die typischerweise teilkreisförmige Außenkontur des Lagergehäuses angepasst. Zumindest ist die Breite der Vertiefung im Maschinenträger an den eintauchenden Teil des Lagergehäuses, insbesondere an dem Außendurchmesser des ringförmigen Teils des Lagergehäuses angepasst. D.h. die Breite entspricht bis auf notwendige Einbautoleranzen dem Außendurchmesser.

In zweckdienlicher Weiterbildung wird das Lagergehäuse mithilfe einer (Hilfs-) Einrichtung axial verschoben wird, um das Lagergehäuse von dem alten Lager zu entfernen. Bei dieser Einrichtung handelt es sich insbesondere um eine Abdrück- oder Abzugseinrichtung, mit deren Hilfe das Lagergehäuse in Richtung der Rotationsachse verschoben wird. Es erfolgt also allgemein ein axiales Abziehen oder Abdrücken. Die Einrichtung verschiebt das Lagergehäuse relativ zum Lager. Die Einrichtung stützt sich dabei gemäß einer ersten Variante (temporär) am Maschinenträger oder der Rotoreinheit ab, ist also zumindest während des Abziehens mit diesem (dieser) beispielsweise über lösbare Verbindungen verbunden. Alternativ stützt sich die Abzugseinrichtung lediglich einerseits am Lagergehäuse und andererseits am Lager ab und wird hierzu vorzugsweise temporär am Lagergehäuse angeordnet und weist beispielsweise Stempel auf, die gegen das Lager drücken. Insbesondere stützt sich die Einrichtung, insbesondere zumindest ein Stempel an der Rotoreinheit, also beispielsweise an der Nabe oder einer Rotorlockscheibe ab. Bei dem Stempel handelt es sich insbesondere um einen Hydraulikstempel.

Wie bereits erwähnt, ist eine Haltevorrichtung vorgesehen, welche die Rotorwelle während des Austausches abstützt, um also die Rotorwelle abzustützen, wenn die Abstützung durch das Lager nicht mehr vorhanden ist.

Diese Haltevorrichtung ist vorzugsweise zumindest teilweise im Bereich zwischen dem Lagersitz und dem vorderen Ende der Rotorwelle, speziell der Rotornabe angeordnet. Unter "zumindest teilweise" wird hierbei verstanden, dass sich die Haltevorrichtung über eine gewisse axiale Länge erstreckt und dass sich ein Teilbereich in Axialrichtung bis auf Höhe des Lagersitzes oder über diesen hinaus erstrecken kann. Entscheidend ist, dass zumindest ein vorderer Teilbereich der Haltevorrichtung zwischen dem Lagersitz und der Rotornabe angeordnet ist und insbesondere auch in diesem vorderen Bereich die Rotorwelle abstützt. Zumindest die Aufnahme der erforderlichen Kräfte zum Abstützen der Rotorwelle erfolgt bevorzugt im Bereich zwischen dem Lagersitz und der Rotornabe.

Das Lager weist typischerweise mehrere Anbauteile auf, wie beispielsweise einen Dichtungsträger, einen Dichtungsdeckel, einen Distanzring, eine Wellenmutter etc. In bevorzugter Ausgestaltung wird zumindest eines und werden vorzugsweise mehrere / alle dieser Anbauteile zerstörungsfrei in Richtung der Rotationsachse axial verschoben und nach dem Austausch des Lagers wieder verwendet. Diese Teile verbleiben daher - ebenso wie das ringförmige Lagergehäuse - während des Austausches um die Rotorwelle herum angeordnet. Das Lagergehäuse wie auch die Anbauteile werden lediglich axial entlang der Rotorwelle in einen rückwärtigen, typischerweise zum Getriebe hin orientierten Bereich verschoben, sodass das Lager zugänglich ist.

Um das Abdrücken oder Abziehen des Lagergehäuses zu erleichtern wird in zweckdienlicher Ausgestaltung das Lagergehäuse und/oder das gebrauchte Lager vor dem Abdrücken / Abziehen und/oder vor dem Wideraufschieben des Lagergehäuses behandelt, insbesondere wärmebehandelt, sodass eine gewisse relative Dehnung in radialer Richtung auftritt.

Gemäß einer ersten Verfahrensvariante wird das Lagergehäuse zunächst abgedrückt / abgezogen, während das gebrauchte Lager sich noch im Lagersitz befindet. Gemäß einer alternativen Ausgestaltung wird in einem ersten Schritt das gebrauchte Lager zusammen mit dem Lagergehäuse in Gänze axial verschoben, bevor das Lagergehäuse abgedrückt / abgezogen wird. Bei der erstgenannten Variante erfolgt das Abdrücken / Abziehen typischerweise entgegen der Axialrichtung, also in Richtung von der Rotornabe zu einem Getriebe. Bei der zweiten Variante kann alternativ ein Abdrücken / Abziehen des Lagergehäuses auch nach vorne in Richtung zur Rotornabe erfolgen. Bei der zweiten Alternative werden nämlich regelmäßig das Lagergehäuse mit dem darin befindlichen Lager zunächst nach hinten entgegen der Axialrichtung verschoben, sodass nach vorne Freiraum geschaffen wird.

Zur Montage des neuen Lagers wird gemäß einer ersten bevorzugten Variante zunächst das gesamte neue Lager um die Rotorwelle angeordnet und aufgebaut.

Hierzu werden die einzelnen Lagerteile (Innenring, Außenring, ggf. Lagerkäfig...), die insbesondere segmentartig ausgebildet sind, insbesondere sukzessive angeordnet. Anschließend wird das Lagergehäuse über das zuvor fertiggestellte neue Lager geschoben.

Gemäß einer bevorzugten zweiten Variante wird das neue Lager zunächst nur teilweise um die Rotorwelle herum aufgebaut, sodass lediglich ein teilmontiertes Lager vorbereitet ist. Anschließend wird das Lagergehäuse zusammen mit einem weiteren Lagerbauteil auf das teilmontierte Lager axial geschoben. Bei dem teilmontierten Lager handelt es sich beispielsweise um einen Innenring, ggf. mit darauf angeordneten Wälzelementen (Rollen, Kegel), die also vormontiert die Rotorwelle vollumfänglich umgeben. Bei den weiteren Lagerbaueilen handelt es sich beispielsweise um den Außenring oder ein Teil von diesem, der gemeinsam mit dem Lagergehäuse aufgeschoben wird.

Für beide dargestellten Varianten, d.h. sowohl für die Variante, bei der zunächst das gesamte Lager aufgebaut wird, als auch für die Variante, wonach zunächst lediglich ein Teil des Lagers aufgebaut wird, erfolgt die Montage des (teilmontierten) neuen Lagers vorzugsweise direkt am Lagersitz. Alternativ besteht auch die Möglichkeit, dass der Aufbau des neuen Lagers entfernt vom Lagersitz erfolgt, anschließend das (teilmontierte) Lager in den Lagersitz verschoben wird. Schließlich besteht auch die Möglichkeit, dass das Lager beabstandet vom Lagersitz (teil-) montiert und anschließend das Lagergehäuse darüber geschoben wird und schließlich das Lagergehäuse gemeinsam mit dem neuen Lager in den Lagersitz verschoben wird.

In zweckdienlicher Ausgestaltung ist - speziell im Hinblick auf die zuvor beschriebene zweite Variante mit dem teilmontiertem Lager - das Lager als ein zweireihiges Lager mit zwei Reihen von Wälzkörpern ausgebildet und der Außenring des neuen Lagers ist in Axialrichtung betrachtet in mehrere Außenring-Teile geteilt. Einer dieser Außenring-Teile wird dann vorzugsweise zusammen mit dem Lagergehäuse auf das teilmontierte Lager aufgeschoben.

In bevorzugter Ausgestaltung ist eine Hebeeinrichtung vorgesehen, mit deren Hilfe die Rotorwelle insbesondere relativ zum Maschinenträger angehoben wird. Hierdurch wird die Demontage / Montage und insbesondere das Abdrücken / Abziehen vom Lager bzw. das Aufschieben auf das Lager vereinfacht. Die Rotorwelle wird dabei beispielsweise allenfalls einige mm bis wenige cm angehoben.

In bevorzugter Ausgestaltung wird ein altes, gebrauchtes Dichtungssystem, welches zum Abdichten des Lagers eingesetzt ist, durch ein andersartiges Dichtungssystem ersetzt. Speziell wird beispielsweise ein Labyrinth-Dichtungssystem des alten Lagers ersetzt durch einen Rotorwellendichtring beim neuen Lager. Dieser weist im Vergleich zu einem Labyrinth-Dichtsystem einen geringeren Platzbedarf auf und kompensiert ein evtl. größeres Bauvolumen des neuen Lagers. Geteilte Lager weisen üblicherweise ein etwas größeres Bauvolumen als nicht geteilte Lager auf.

Im Hinblick auf die Ausgestaltung des neuen Lagers und dessen Unterteilung in verschiedene Lagerringsegmente sind grundsätzlich unterschiedliche, an sich bekannte Aufbauten möglich. Bevorzugt ist das neue Lager gemäß Anspruch 7 der EP 3 333 439 A1 ausgebildet, wie es auch in den Abs. [0023] bis [0032] beschrieben ist. Diese speziellen Ausgestaltungen und diese Beschreibungsteile werden hiermit in die Offenbarung der vorliegenden Anmeldung mit einbezogen.

Der Ablauf des Austausches ist beispielsweise wie folgt:
1. Traverse (Haltevorrichtung) zum Halten des Rotors befestigen
2. Dichtungsträger, Deckel und ähnliches vom Rotorlagergehäuse abschrauben
3. Anheben der Rotoreinheit mittels der Haltevorrichtung
4. Rotorlagergehäuse vom Lager abziehen und in Richtung Getriebe bewegen
5. Altes Lager entfernen (speziell durch ein Trennverfahren)
6. Je nachdem ob die Dichtungsträger und Deckel wiederverwendet werden sollen ebenfalls entfernen oder lediglich abziehen (belassen)
7. Neues geteiltes Lager montieren
8. Gehäuse auf neues Lager aufschieben und Rotoreinheit wieder absenken
9. Neue geteilte oder alte Dichtungsträger und Deckel montieren
10. Haltevorrichtung demontieren

Bei der Variante mit einem in Axialrichtung geteilten Außenring ist beispielsweise eine leichtere Montagereihenfolge mit nachfolgenden geänderten Schritten 7 und 8 vorgesehen:
7. Lagerinnenringe und Käfig mit Wälzkörpern auf der Welle montieren, getriebeseitige Laufbahnsegmente des Außenrings im Gehäuse montieren.
8. Lagergehäuse auf das Lager schieben. Rotorseitigen Außenring-Teil, also rotorseitige Laufbahnsegmente des Außenrings montieren.

Die Aufgabe wird weiterhin gelöst durch eine Lageranordnung, insbesondere einer Windkraftanlage, wobei die Lageranordnung ein in einem Lagergehäuse angeordnetes Lager, speziell das Hauptlager der Windkraftanlage aufweist, wobei es sich bei dem Lagergehäuse um ein gebrauchtes Lagergehäuse und bei dem Lager um ein ausgetauschtes insbesondere neues, noch nicht benutztes Lager handelt. Die Lageranordnung wurde dabei insbesondere mittels des zuvor beschriebenen Verfahrens erstellt.

Das besondere Kennzeichen dieser Lageranordnung ist darin zu sehen, dass ein neues Lager mit einem alten Lagergehäuse kombiniert ist, wie dies durch das spezielle, zuvor beschriebene Verfahren erreicht ist. Weiterhin ist ein besonderes Kennzeichen dieser Lageranordnung darin zu sehen, dass ein geteiltes Lager mit einem ungeteilten Lagergehäuse kombiniert ist. D.h. das Lager ist aus mehreren Lagerringsegmenten (sowohl für den Innenring als auch für den Außenring) aufgebaut, wobei diese sich jeweils in Umfangsrichtung zu einem umlaufenden Ring ergänzen. Gleichzeitig ist das Lagergehäuse einstückig, insbesondere monolithisch ausgebildet. Die im Zusammenhang mit dem Verfahren angeführten bevorzugten Ausgestaltungen gelten sinngemäß auch für die Lageranordnung.

Die Aufgabe wird weiterhin gelöst durch eine Vorrichtung mit den Merkmalen des Anspruchs 15. Ein besonderer Aspekt ist in der speziellen Ausgestaltung und/oder der speziellen Positionierung der Haltevorrichtung zum Abstützen der Rotorwelle zu sehen.

Vorzugsweise ist an der Rotorwelle allgemein eine Platte befestigt, und speziell ist diese Platte als eine Rotorlockscheibe ausgebildet. Die Haltevorrichtung ist mit dieser Platte, speziell mit der Rotorlockscheibe verbunden und über diese mittelbar mit der Rotorwelle verbunden. Die Haltevorrichtung stützt die Rotorwelle vorzugsweise ausschließlich über eine Befestigung an der Rotorlockscheibe ab. Eine solche Rotorlockscheibe ist regelmäßig vorgesehen und ist typischerweise als ein zumindest teilringförmiges, vorzugsweise ringförmiges Scheibenelement mit Bohrungen ausgebildet, die nachfolgend als Sicherungslöcher bezeichnet sind.

Mittels einer Rotorlockvorrichtung werden üblicherweise Bolzen in diese Bohrungen eingesetzt, sodass eine Rotation der Rotorwelle und damit auch des Rotorsterns unterbunden ist. Der besondere Vorteil des hier beschriebenen Verfahrens ist daher insbesondere auch darin zu sehen, dass das Abstützen der Rotorwelle über diese Rotorlockscheibe erfolgt. Die Haltevorrichtung ist vorzugsweise über einen in das zumindest eine Sicherungsloch eingreifenden Bolzen befestigt.

Typischerweise weist die Rotorlockscheibe mehrere auf einem Kreisbogen liegende Sicherungslöcher auf und die Haltevorrichtung ist über mehrere Bolzen an der Rotorlockscheibe beim Austausch befestigt. Die Bolzen sind daher entsprechend ebenfalls auf einer Kreisbogenlinie angeordnet.

Die Haltevorrichtung weist vorzugsweise gemäß einer ersten Ausführungsvariante eine Quertraverse auf, welche oberhalb der Rotorwelle verläuft. In dieser Quertraverse sind die mehreren Bolzen angeordnet. Die Quertraverse weist üblicherweise zumindest ein und vorzugsweise mehrere Durchgangslöcher auf. Diese fluchten mit den entsprechenden Sicherungslöchern der Rotorlockscheibe, liegen daher ebenfalls auf einer Kreisbogenlinie.

In bevorzugter Ausgestaltung weist die Haltevorrichtung neben der Quertraverse zusätzlich zwei seitlich Tragstützen auf, über die sich die Haltevorrichtung auf dem Maschinenträger abstützt.

Alternativ zu der Befestigung über die Quertraverse ist die Haltevorrichtung direkt über die Tragstützen an der Rotoreinheit befestigt. Neben einer bevorzugten Befestigung an der Rotorlockscheibe ist alternativ auch eine Befestigung der Haltevorrichtung an der Rotorwelle oder der Nabe vorgesehen.

Über die Tragstützen stützt sich die Haltevorrichtung auf dem Maschinenträger lediglich derart ab, dass eine Relativbewegung der Haltevorrichtung relativ zum Maschinenträger, speziell zum Anheben der Rotorwelle ermöglicht ist.

In zweckdienlicher Weiterbildung ist eine Ausrichtvorrichtung, insbesondere eine Hebeeinrichtung vorgesehen, mittels der die Rotorwelle relativ zum Maschinenträger ausrichtbar ist und insbesondere anhebbar. Während des Austausches erfolgt beispielsweise eine Anhebung in vertikaler Richtung, also senkrecht zur Axialrichtung um allenfalls einige mm oder wenige cm (<10cm, insbesondere <5cm), um die Montage/Demontage zu erleichtern.

In zweckdienlicher Ausbildung ist die Ausrichtvorrichtung, insbesondere der Hebemechanismus, zwischen den Tragstützen der Haltevorrichtung und dem Maschinenträger wirksam. Bevorzugt ist allgemein die Haltevorrichtung insgesamt zusammen mit der Rotorwelle relativ zum Maschinenträger anhebbar. Hierzu weist der Hebemechanismus vorzugsweise einen ausfahrbaren Stempel auf, welcher sich beispielsweise am Maschinenträger abstützt. Der Stempel ist dabei beispielsweise hydraulisch oder elektrisch ausfahrbar. Der Hebemechanismus ist dabei beispielsweise direkt auch Teil der Haltevorrichtung und an dieser befestigt.

In bevorzugter Ausgestaltung ist die Haltevorrichtung einerseits an der Rotoreinheit und andererseits um eine Schwenkachse schwenkbar am Maschinenträger befestigt. Über die Befestigung am Maschinenträger ist ein in Axialrichtung wirksame Befestigung erreicht. Gleichzeitig wird durch die schwenkbewegliche Befestigung eine Dreh- oder Kippbewegung der Haltevorrichtung und damit der Rotoreinheit ermöglicht, so dass diese im vorderen, nabenseitigen Bereich über die Hebeeinrichtung angehoben werden kann.

Erfindungsgemäß ist weiterhin eine sich axial erstreckende Linearführung vorgesehen, an der das Lagergehäuse befestigbar ist und während des Austausches auch befestigt wird. Entlang der Linearführung wird das Lagergehäuse axial verschoben. Die Linearführung hat den besonderen Vorteil, dass ein passgenaues Verschieben des Lagergehäuses über das neue Lager zuverlässig trotz der üblicherweise geringen Spaltmaße (im Bereich von wenigen 1/10 mm) zwischen Lager und Lagergehäuse ermöglicht ist.

In bevorzugter Ausgestaltung ist die Linearführung dabei an der Haltevorrichtung befestigt. Sie wird vorzugsweise mit dieser um die zuvor erwähnte Schwenkachse beim Anheben der Rotoreinheit verkippt.

Ein Ausführungsbeispiel wird nachfolgend anhand der Figuren näher erläutert. Dabei zeigen in vereinfachten Darstellungen:
- Fig. 1: eine erste ausschnittsweise perspektivische Darstellung einer Lageranordnung eines Hauptlagers einer Windkraftanlage an einem Maschinenträger ,
- Fig. 2: eine zweite ausschnittsweise perspektivische Darstellung der Lageranordnung gemäß Fig. 1 mit Blick auf das Hauptlager.
- Fig. 3: eine ausschnittsweise Schnittdarstellung der Lageranordnung gemäß Fig. 1
- Fig. 4: eine vergrößerte ausschnittsweise Schnittdarstellung im Bereich des Hauptlagers,
- Fig. 5A: eine erste perspektivische ausschnittsweise Darstellung der Lageranordnung gemäß Fig. 1 mit Blick auf das Lager während des Austausches des Lagers,
- Fig. 5B: eine zweite perspektivische ausschnittsweise Darstellung ähnlich der Fig. 5A, jedoch mit einer Linearführung,
- Fig. 6: eine Schnittansicht ähnlich Fig. 3, während einer Austauschsituation, wobei ein Lagergehäuse vom Lager abgezogen ist, sowie
- Fig. 7: eine perspektivische Darstellung ähnlich Fig. 2 mit einer alternativen Variante für die Haltevorrichtung.

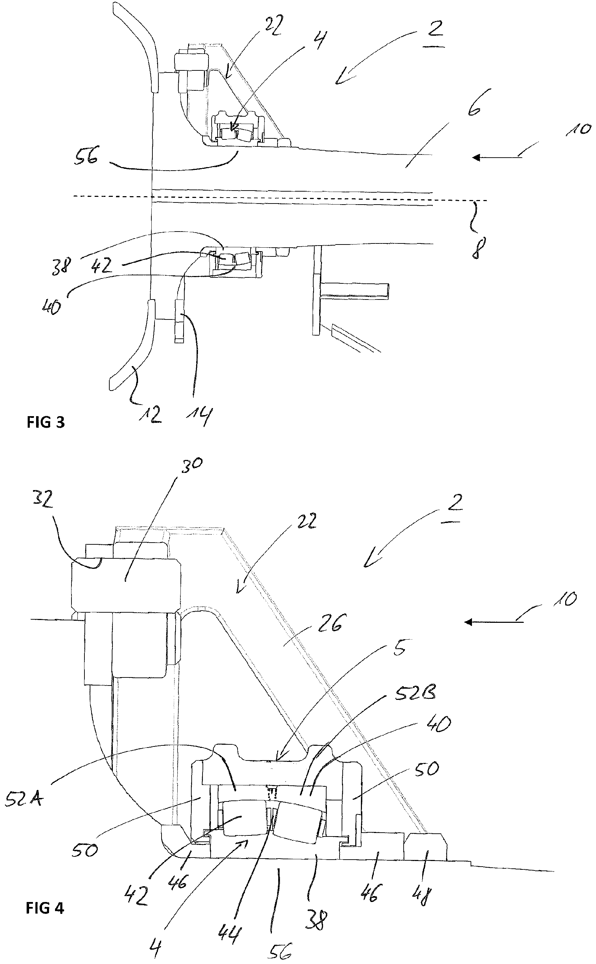

In den Figuren ist jeweils eine Lageranordnung 2 einer hier nicht näher dargestellten Windkraftanlage gezeigt. Die Lageranordnung umfasst dabei ein Lager 4, speziell das sogenannte Hauptlager einer solchen Windkraftanlage sowie ein Lagergehäuse 5. Zur Lageranordnung 2 zugehörig ist weiterhin vorzugsweise eine von dem Lager 4 gelagerte Rotorwelle 6, welche im Betrieb um eine Rotationsachse 8 rotierbar ist. Die Rotorwelle 6 erstreckt sich von einem rückwärtigen, getriebeseitigen Bereich in Axialrichtung 10 zu einem vorderen, nabenseitigen Ende der Rotorwelle 6. An diesem nabenseitigen Ende ist im Betriebszustand eine Rotornabe 12 befestigt, wie dies in der Figur 3 stark vereinfacht dargestellt ist.

Wie insbesondere beispielsweise anhand der Querschnittsdarstellung gemäß der Figur 3 zu entnehmen ist, weitet sich die Rotorwelle 6 zu ihrem nabenseitigen Ende hin zu einem Art Anschlussflansch zur Befestigung mit der Rotornabe 12 auf. An diesem Anschlussflansch ist weiterhin eine sogenannte als Ring ausgebildete Rotorlockscheibe 14 befestigt. Das Lager 4 ist im Ausführungsbeispiel unmittelbar benachbart zu dem nabenseitigen, sich aufweitenden Anschlussflansch der Rotorwelle 6 angeordnet. Im rückwärtigen Bereich ist die Rotorwelle 6 im Ausführungsbeispiel mit einem Getriebe 16 verbunden. Bei getriebelosen Ausgestaltungen ist die Rotorwelle 6 unmittelbar mit einem Generator bzw. einem Generatorrotor verbunden. Die gesamte Lageranordnung 2 sowie auch das Getriebe 16 beziehungsweise Generator sind dabei auf einen Maschinenträger 18 angeordnet. Dieser ist allgemein dadurch gekennzeichnet, dass er zwei seitliche Stützflächen 20 aufweist, zwischen denen ein Freiraum ausgebildet ist, in den das Getriebe 16, insbesondere aber auch die Lageranordnung 2, also das Lager 4, das Lagergehäuse 5 und vorzugsweise auch die Rotorwelle 6 teilweise eintaucht. Speziell ist der Maschinenträger 18 zumindest im vorderen Bereich, wo sich das Lager 4 befindet, in etwa halbschalenartig ausgebildet. Auf den Stützflächen 20 stützt sich sowohl das Lager 4 als auch das Getriebe 16 ab.

Weiterhin ist in den Figuren eine Haltevorrichtung 22 dargestellt, mit deren Hilfe die Rotorwelle 6 während eines Lagertausches am Maschinenträger 18 abgestützt wird. Die Haltevorrichtung 22 weist hierzu allgemein einen oberhalb der Rotorwelle 4 verlaufenden Querträger 24 sowie zwei seitliche Tragstützen 26 auf, welche sich an den Stützflächen 20 des Maschinenträgers 18 abstützen. Die beiden Tragstützen 26 sind dabei vorzugsweise jeweils durch einen im Ausführungsbeispiel in etwa dreieckförmigen Tragrahmen gebildet. An der Haltevorrichtung 22 ist weiterhin eine Hebeeinrichtung 28 angeordnet, welche zum Anhaben der Haltevorrichtung 22 gegenüber den Stützflächen 20 ausgebildet ist. Diese Hebeeinrichtung 28 weist beispielsweise elektrisch oder hydraulisch betätigbare und ausfahrbare Stempel oder Verstellschrauben auf.

Im Querträger 24 sind Bolzen 30 durch Durchgangslöcher hindurch gesteckt und beim Verfahren zum Austausch des Lagers 4 greifen diese in entsprechende Sicherungslöcher 32 der Rotorlockscheibe 14 ein.

Das Lager 4 ist allgemein in dem Lagergehäuse 5 angeordnet. Bei diesem handelt es sich um ein das Lager 4 vollumfänglich umgreifendes ringförmiges Element, welches zwei gegenüberliegende Befestigungsflansche 36 aufweist, die also radial abstehen. Diese Befestigungsflansche 36 liegen auf den Stützflächen 20 des Maschinenträgers 18 auf. Das Lagergehäuse 5 ist typischerweise mit Schrauben am Maschinenträger 18 befestigt. Im Ausführungsbeispiel weist das Lagergehäuse 5 außenseitig zwei voneinander beabstandete umlaufende Versteifungsrippen auf.

Der Aufbau des Lagers 4 ergibt sich insbesondere aus den Figuren 3 - 6. Und zwar weist das Lager 4 einen Innenring 38, einen Außenring 40 sowie dazwischen angeordnete Wälzkörper 42 auf. Diese sind dabei typsicherweise in einem Lagerkäfig 44 angeordnet. Im Ausführungsbeispiel ist das Lager 4 als zweireihiges Rollenlager ausgebildet. Weiterhin weist die Lageranordnung 2 beidseitig jeweils einen Distanzring 46 auf. Im Ausführungsbeispiel stützt sich der nabenseitige Distanzring 46 an einer Anschlagfläche der Rotorwelle 6 ab. Der getriebeseitige Distanzring 46 liegt an einer Wellenmutter 48 an. Zwischen den beiden Distanzringen 46 ist der Innenring 38 klemmend gehalten. Dem Lagergehäuse 5 zugehörig sind noch zwei seitliche, ringförmige Gehäuse- oder Dichtungsdeckel 50. Der Innenring 38 sowie der Außenring 40 sind im Ausführungsbeispiel jeweils in Axialrichtung 10 ungeteilt. Alternativ ist der Außenring 40 in axialer Richtung geteilt in einen nabenseitigen Außenring-Teil 52A und einem getriebeseitigen Außenring-Teil 52B. Unter nabenseitig wird vorliegend immer der in Axialrichtung 10 der Rotornabe 12 zugewandte Bereich und unter getriebeseitig der gegenüberliegende Bereich verstanden. Diese alternative Ausgestaltung ist in der Figur 4 durch eine gestrichelt dargestellte Trennlinie illustriert.

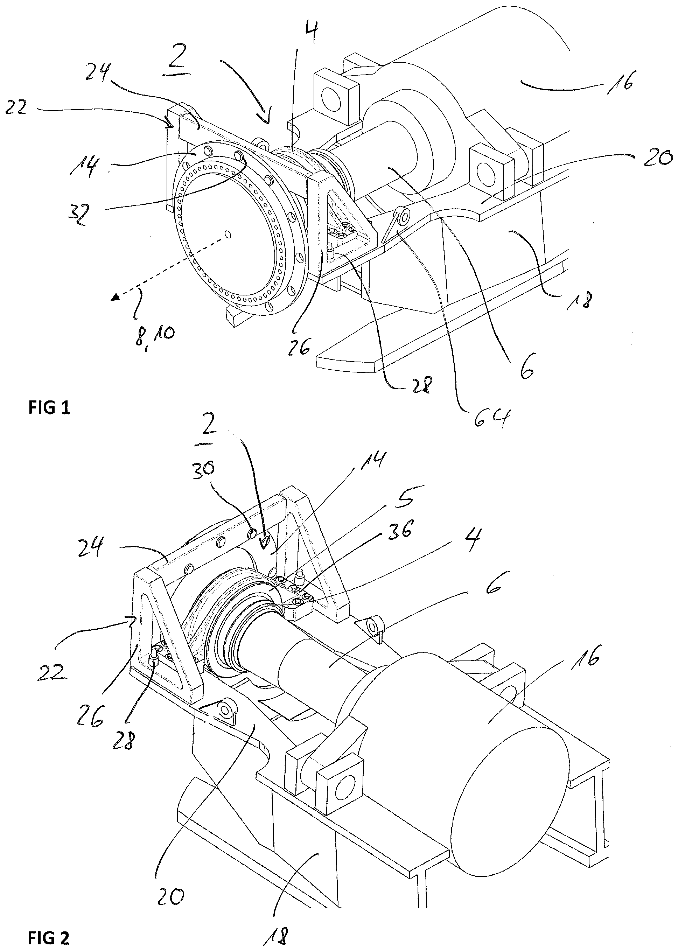

Die Figuren 1 und 2 zeigen eine Ausgangssituation mit einem alten, gebrauchten Lager 4, in der normalen Einbausituation, bei der das Lagergehäuse 5 am Maschinenträger 18 befestigt ist und das Lager 4 aufnimmt, in dem die Rotorwelle 6 gelagert ist. Nabenseitig an der Rotorwelle 6 ist ein hier nicht näher dargestellter, sogenannter Rotorstern befestigt. Dieser weist die Rotornabe 12 sowie daran befestigte Rotorblätter auf. Die in den Figuren dargestellte Anordnung befindet sich allgemein bei Windkraftanlagen am oberen Ende eines Turms innerhalb einer sogenannten Gondel, die typischerweise um eine Vertikalachse drehbar ist.

Die dargestellte Haltevorrichtung 22 wird typischerweise temporär angeordnet und befestigt. Im Ausführungsbeispiel wird die Haltevorrichtung 22 wie beschrieben über die Bolzen 30 an der Rotorlockscheibe 14 formschlüssig oder kraftschlüssig befestigt. Zum Austausch des Lagers 4 wird wie folgt vorgegangen:
Zunächst werden die Anbauteile, insbesondere die Wellenmutter 48, der getriebeseitige Distanzring 46 sowie der getriebeseitige Dichtungsdeckel 50 entgegen der Axialrichtung 10 entlang der Rotorwelle 6 nach hinten in Richtung zum Getriebe 16 abgezogen. Anschließend wird das zuvor vom Maschinenträger 18 gelöste Lagergehäuse 5 ebenfalls entgegen der Axialrichtung 10 nach hinten vom Lager 4 abgedrückt oder abgezogen.

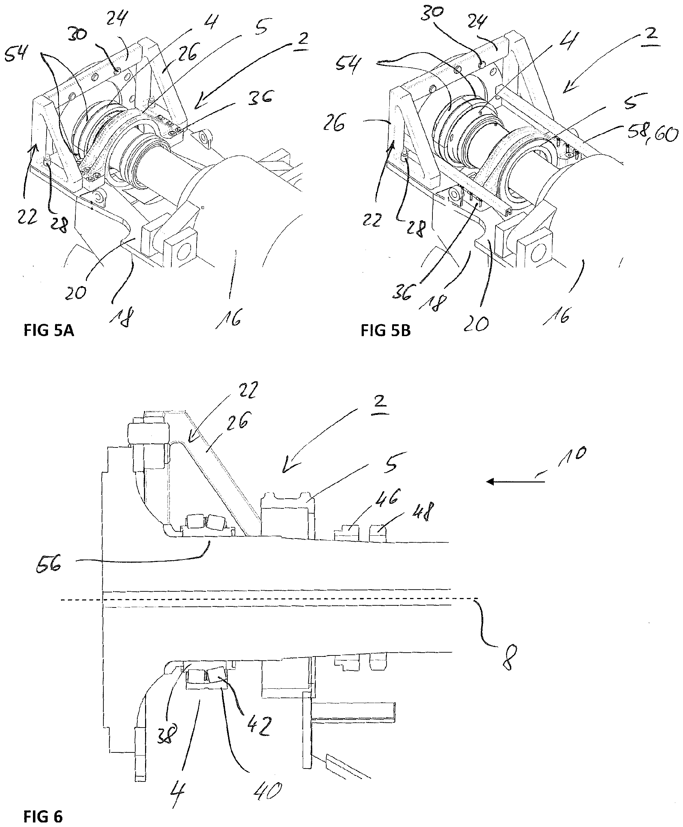

Anschließend wird das Lager 4 demontiert. Sofern es sich um ein geteiltes Lager handelt, werden die einzelnen Ringsegmente gegebenenfalls zerstörungsfrei voneinander getrennt. Im Fall eines nicht geteilten Lagers erfolgt typischerweise eine zerstörende Demontage, indem die Lagerringe 38, 40 in einzelne Teilstücke beispielsweise durch Trennschweißen getrennt werden. Die verbrauchten Lagerteile werden entfernt und anschließend wird ein neues Lager 4 um die Rotorwelle 6 herum aufgebaut. Das neue Lager 4 ist dabei zwingend als ein geteiltes Lager 4 ausgebildet. Sowohl der Innenring 38 als auch der Außenring 40 sind in einzelne Ringsegmente unterteilt, die jeweils um die Rotationsachse 8 und damit um die Rotorwelle 6 herum angebracht werden. In Fig. 5B ist ein derartiges geteiltes Lager mit Ringsegmenten 54 für den Außenring 40 zu erkennen.

Bei dem in Figur 5B dargestellten Ausführungsbeispiel wird das neue Lager 4 im Bereich eines Lagersitzes 56 aufgebaut. Der Lagersitz 56 ist definiert durch die Position, die das Lager 4 im Betrieb einnimmt. Speziell ist der Lagersitz 56 definiert durch den Bereich zwischen den beiden Distanzringen 46.

In der Figur 5B ist - als wesentlicher Unterschied zu der Situation in 5A - zusätzlich noch eine Linearführung 58 illustriert. Die Linearführung 58 wird insbesondere temporär befestigt, bevorzugt an der Haltevorrichtung 22, insbesondere an deren Tragstützen 26. Alternativ kann die Linearführung 58 auch am Maschinenträger 18 befestigt werden. Die Linearführung 58 ist beispielsweise nach Art einer Schiene ausgebildet. In diese Linearführung 58 greifen hier nicht näher dargestellte Führungselemente ein, die entweder Teil des Lagergehäuses 5 sind oder mit diesem verbunden sind. Über die Linearführung 58 ist eine exakte und möglichst toleranzfreie Verschiebung des Lagergehäuses 5 in und entgegen der Axialrichtung 10 gewährleistet. Dies ist speziell für die Montage, also dem Aufschieben des Lagergehäuses auf das neue Lager 4 aufgrund der geringen Spaltmaße von besonderem Vorteil.

Zur Vereinfachung der Montage wird die Rotorwelle 6 über die erwähnte Hebeeinrichtung 28 geringfügig, beispielsweise im Bereich von einigen mm bis wenigen Zentimetern (beispielsweise 1 -2 Zentimeter) angehoben, sodass das Lagergehäuse 5 insgesamt lastfrei ist, also nicht mehr unter Belastung auf den Stützflächen 20 aufliegt. Für eine einfachere Montage/Demontage wird das Lagergehäuse 5 vorzugsweise zudem erwärmt, sodass es sich etwas radial ausdehnt.

Die Figur 6 zeigt eine Schnittdarstellung durch eine Situation ähnlich der Figur 5A, bei der das Lagergehäuse 5 entgegen der Axialrichtung 10 nach hinten abgedrückt oder abgezogen ist. In der Figur 6 ist dabei lediglich in der unteren Bildhälfte ein Ringsegment 54 des Außenrings 40 dargestellt. In der oberen Bildhälfte fehlt dieses Ringsegment 54 noch. Ausgehend von den in den Figuren 5A, 5B und 6 dargestellten Situationen wird das Lagergehäuse 5 in Axialrichtung 10 auf das montierte Lager 4 wieder aufgeschoben. Gleiches gilt auch für die Anbauteile wie Distanzring 46 und Wellenmutter 48.

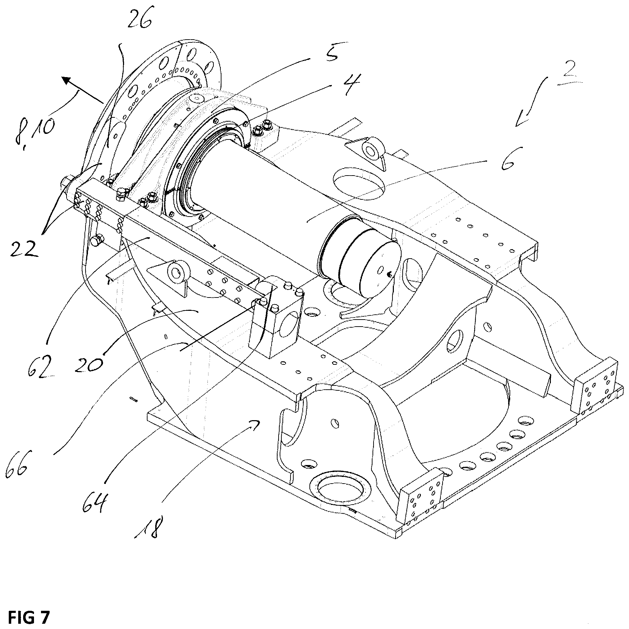

Fig. 7 zeigt eine alternative Variante für die Haltevorrichtung 22. Bei dieser sind die Tragstützen 26 direkt an der Rotoreinheit, insbesondere an der Rotorlockscheibe 14 befestigt.

An eine jeweilige Tragstütze 26 schließt sich ein Längsträger 62 an, welcher an einem Schwenk- oder Kipplager 64 mit dem Maschinenträger 18 verbunden ist. Der Längsträger 62 ist dabei um eine durch das Kipplager 64 definierte Schwenkachse 66 verdrehbar. Bei einem Anheben der Rotoreinheit im nabenseitigen vorderen Bereich verdreht sich der Längsträger 62 etwas um die Schwenkachse 66. Der Längsträger 62 ist daher nach Art eines Kipphebels ausgebildet. Das Kipplager 64 befindet sich dabei vorzugsweise in einem hinteren, getriebeseitigen Bereich, insbesondere an einer Getriebeabstützung, also an einer Stützkonstruktion, mittels der das (in Fig. 7 nicht dargestellte) Getriebe 16 sich am Maschinenträger 18 abstützt.

In der Fig. 7 ist lediglich an einer Seite eine Tragstütze 26 sowie der Längsträger 62 dargestellt. Bevorzugt sind beidseitig jeweils eine Tragstütze 26 sowie ein Längsträger 62 angeordnet.

Auch bei der Ausführungsvariante der Fig. 2 bis 6 ist die Haltevorrichtung 22 vorzugsweise über ein Kipplager 64 mit dem Maschinenträger 18 verbunden, Umgekehrt ist auch bei der Variante gemäß der Fig. 7 die Hebeeinrichtung 28 sowie vorzugsweise auch die Linearführung 58 vorgesehen.

Das axiale Verschieben des Lagergehäuses 5 gegenüber dem gebrauchten Lager 4 erfolgt mit Hilfe einer hier nicht näher dargestellten Hilfseinrichtung, insbesondere mit Hilfe einer Abdrückeinrichtung. Diese weist einen oder mehrere (Hydraulik-) Stempel auf, die sich einerseits an der Rotoreinheit und andererseits am Lagergehäuse abstützen.

Das hier vorgestellte Austauschkonzept wird vorzugsweise bei Drei-Punktlagerungen sowie Vier-Punktlagerungen von Windkraftanlagen eingesetzt. Das hier beschriebene Austauschkonzept ist jedoch nicht auf derartige Anwendungen beschränkt.

Ausgangspunkt des Austauschkonzepts ist zum einen, dass der Austausch des Lagers 4 ohne Demontage der Rotorwelle 6 erfolgt und dass weiterhin das Lagergehäuse 5 lediglich axial abgedrückt / abgezogen und anschließend wieder auf das neue Lager 4 aufgeschoben wird. Bei dem Lagergehäuse 5 handelt es sich erfindungsgemäß um ein einstückiges, monolithisches Bauteil, welches also nicht in einzelne Gehäusehälften oder Ringsegmente unterteilt ist.

### Bezugszeichenliste

| | | | |
|---|---|---|---|
| 2 | Lageranordnung | 52A | nabenringseitiger Außenring-Teil |
| 4 | Lager | 52B | getriebeseitiger Außenring-Teil |
| 5 | Lagergehäuse | 54 | Ringsegmente |
| 6 | Rotorwelle | 56 | Lagersitz |
| 8 | Rotationsachse | 58 | Linearführung |
| 10 | Axialrichtung | 60 | |
| 12 | Rotornabe | 62 | Längsträger |
| 14 | Rotorlockscheibe | 64 | Kipplager |
| 16 | Getriebe | 66 | Schwenkachse |
| 18 | Maschinenträger | | |
| 20 | Stützflächen | | |
| 22 | Haltevorrichtung | | |
| 24 | Querträger | | |
| 26 | Tragstützen | | |
| 28 | Hebeeinrichtung | | |
| 30 | Bolzen | | |
| 32 | Sicherungslöcher | | |
| 36 | Befestigungsflansche | | |
| 38 | Innenring | | |
| 40 | Außenring | | |
| 42 | Wälzkörper | | |
| 44 | Lagerkäfig | | |
| 46 | Distanzring | | |
| 48 | Wellenmutter | | |
| 50 | Dichtungsdeckel | | |

## Patentansprüche

1. Verfahren zum Austausch eines gebrauchten Lagers durch ein neues Lager, insbesondere zum Austausch eines gebrauchten Großlagers wie das Hauptlager einer Windkraftanlage, wobei
- das gebrauchte Lager im Betrieb an einem Lagersitz angeordnet ist und eine sich entlang einer Rotationsachse und in einer Axialrichtung in Richtung zu einer Rotornabe erstreckende Rotorwelle als Teil einer Rotoreinheit lagert und das gebrauchte Lager in einem Lagergehäuse angeordnet ist, welches an einem Maschinenträger befestigt ist, wobei
- der Austausch des gebrauchten Lagers ohne Demontage der Rotorwelle erfolgt, indem
- das Lagergehäuse durch axiales Verschieben vom gebrauchten Lager entfernt wird
- das gebrauchte Lager geteilt und von der Rotorwelle entfernt wird,
- das neue Lager um die Rotorwelle angebracht wird,
- das neue Lager nach der Entfernung des alten Lagers wieder im Lagergehäuse angeordnet wird, **dadurch gekennzeichnet, dass**
- das Lagergehäuse als ein einstückiges, nicht geteiltes Lagergehäuse ausgebildet ist.

2. Verfahren nach dem vorhergehenden Anspruch, bei dem das Lagergehäuse mit Hilfe einer Einrichtung axial verschoben wird, die sich am Lagergehäuse und vorzugsweise am gebrauchten Lager abstützt.

3. Verfahren nach einem der vorhergehenden Ansprüche, bei dem eine Haltevorrichtung montiert ist, welche die Rotorwelle während des Austausches abstützt, wobei die Haltevorrichtung die Rotoreinheit in Axialrichtung betrachtet vorzugsweise nach dem Lagersitz abstützt.

4. Verfahren nach einem der vorhergehenden Ansprüche, bei dem das Lager mehrere Anbauteile aufweist, die ausgewählt sind aus Dichtungsdeckel, Dichtungsträger, Distanzring, Wellenmutter, wobei zumindest eines, vorzugsweise mehrere dieser Anbauteile, zerstörungsfrei axial verschoben werden und nach dem Austausch des Lagers wieder verwendet werden.

5. Verfahren nach einem der vorhergehenden Ansprüche, bei dem das Lagergehäuse zur Erleichterung der Demontage und / oder der Montage wärmebehandelt wird.

6. Verfahren nach einem der vorhergehenden Ansprüche, bei dem das Lagergehäuse vom gebrauchten Lager entfernt wird, während das gebrauchte Lager sich im Lagersitz befindet.

7. Verfahren nach einem der Ansprüche 1 bis 7, bei dem das gebrauchte Lager zusammen mit dem Lagergehäuse zunächst entlang der Rotationsachse verschoben wird, bevor das Lagergehäuse abgezogen wird.

8. Verfahren nach einem der vorhergehenden Ansprüche, bei dem das Lager einen Innenring sowie einen Außenring und dazwischen angeordnete Wälzkörper aufweist, wobei zur Montage des neuen Lagers
- gemäß einer ersten Variante zunächst das gesamte neue Lager um die Rotorwelle angeordnet wird und dass dann anschließend das Lagergehäuse über das gesamte neue Lager geschoben wird,
- gemäß einer zweiten Variante das neue Lager zunächst nur teilweise um die Rotorwelle als teilmontiertes Lager aufgebaut wird und anschließend das Lagergehäuse zusammen mit einem Lagerbauteil, insbesondere mit einem Außenring in Axialrichtung auf das teilmontierte Lager geschoben wird.

9. Verfahren nach einem der vorhergehenden Ansprüche, bei dem es sich bei dem Lager um ein zweireihiges Lager mit zwei Reihen von Wälzkörpern handelt und der Außenring des neuen Lagers in Axialrichtung betrachtet in mehrere Außenring-Teile geteilt ist, wobei das neue Lager zunächst teilmontiert wird und einer der Außenring-Teile zusammen mit dem Lagergehäuse auf das teilmontierte Lager aufgeschoben wird.

10. Verfahren nach dem vorhergehenden Anspruch, bei dem der Außenring einen nabenseitigen Außenring-Teil sowie gegenüberliegend einen getriebeseitigen Außenring-Teil aufweist und zunächst der getriebeseitige Außenring-Teil mit dem Lagergehäuse auf das teilmontierte Lager aufgeschoben wird und anschließend ein nabenseitiger Außenring-Teil montiert wird.

11. Verfahren nach einem der vorhergehenden Ansprüche, bei dem eine Hebeeinrichtung vorgesehen ist, mit der die Rotorwelle während des Austausches angehoben ist.

12. Verfahren nach einem der vorhergehenden Ansprüche, bei dem ein gebrauchtes Dichtungssystem zum Abdichten des Lagers durch ein neues, andersartiges Dichtungssystem ersetzt wird, insbesondere wird eine LabyrinthDichtung durch einen Rotorwellendichtring ersetzt.

13. Verfahren nach einem der vorhergehenden Ansprüche, bei dem an der Rotorwelle eine Rotorlockscheibe befestigt ist und die Haltevorrichtung mit der Rotorlockscheibe und über diese mit der Rotorwelle verbunden ist.

14. Lageranordnung, insbesondere einer Windkraftanlage, welche ein in einem Lagergehäuse angeordnetes Lager aufweist, welches insbesondere gemäß dem Verfahren nach einem der vorhergehenden Ansprüche ausgetauscht wurde, wobei es sich bei dem Lagergehäuse um ein gebrauchtes einstückiges Lagergehäuse und bei dem es sich bei dem Lager um ein geteiltes, neues ausgetauschtes und zweireihiges Rollenlager mit einem in Axialrichtung ungeteilten Innenring handelt.

15. Vorrichtung zum Austausch eines Lagers einer Anlage, insbesondere zum Austausch eines Großlagers wie das Hauptlager einer Windkraftanlage mit
- einer Rotoreinheit, die eine Rotorwelle aufweist, welche sich in Axialrichtung bis zu einer Rotornabe erstreckt
- einem Maschinenträger
- einem Lager zum Lagern der Rotorwelle, welches im Betrieb an einem vorgegebenen Lagersitz positioniert ist
- einem das Lager umgebenden Lagergehäuse, welches im Betrieb am Maschinenträger befestigt ist
- einer Haltevorrichtung, die am Maschinenträger zum Halten der Rotorwelle befestigt ist, wobei die Haltevorrichtung zumindest teilweise im Bereich zwischen der Lagerposition und der Rotornabe angeordnet ist, **dadurch gekennzeichnet, dass**
- eine Linearführung vorgesehen ist, an der das Lagergehäuse befestigbar und verschiebbar ist.

## Claims

1. Method for replacing a used bearing with a new bearing, in particular for replacing a large bearing such as the main bearing of a wind turbine, wherein
- the used bearing is arranged during operation at a bearing seat and supports a rotor shaft extending along an axis of rotation and in an axial direction towards a rotor hub as part of a rotor unit and the used bearing is arranged in a bearing housing, which is fastened to a machine carrier, wherein
- the replacement of the used bearing is carried out without disassembly of the rotor shaft, by
- removing the bearing housing from the used bearing by axial displacement,
- dividing the used bearing and removing it from the rotor shaft,
- mounting the new bearing around the rotor shaft,
- arranging the new bearing in the bearing housing again after removal of the old bearing, **characterized in that**
- the bearing housing is designed as a one-piece, undivided bearing housing.

2. Method according to the preceding claim, in which the bearing housing is axially displaced by means of a device supported on the bearing housing and preferably on the used bearing.

3. Method according to one of the preceding claims, in which a holding device is mounted, which supports the rotor shaft during replacement, wherein the holding device supports the rotor unit preferably after the bearing seat as viewed in the axial direction.

4. Method according to one of the preceding claims, in which the bearing has a plurality of add-on parts selected from seal cover, seal carrier, spacer ring, shaft nut, wherein at least one of these add-on parts, preferably a plurality of these add-on parts, are axially displaced in a non-destructive manner and being reused after replacement of the bearing.

5. Method according to one of the preceding claims, in which the bearing housing is heat treated to facilitate disassembly and / or assembly.

6. Method according to one of the preceding claims, in which the bearing housing is removed from the used bearing while the used bearing is in the bearing seat.

7. Method according to claims 1 to 7, in which the used bearing together with the bearing housing is first displaced along the axis of rotation before the bearing housing is pulled off.

8. Method according to one of the preceding claims, in which the bearing has an inner ring and an outer ring and rolling elements arranged therebetween, wherein for assembly of the new bearing
- according to a first variant, the entire new bearing is first arranged around the rotor shaft and that then the bearing housing is pushed over the entire new bearing,
- according to a second variant, the new bearing is first built up only partially around the rotor shaft as a partially assembled bearing and then the bearing housing together with a bearing component is pushed onto the partially assembled bearing in the axial direction.

9. Method according to one of the preceding claims, in which the bearing is a double-row bearing having two rows of rolling elements and the outer ring of the new bearing is divided into a plurality of outer ring parts as viewed in the axial direction, wherein the new bearing is first partially assembled and one of the outer ring parts is pushed onto the partially assembled bearing together with the bearing housing.

10. Method according to the preceding claim, in which the outer ring has a hub-side outer ring part and, opposite thereto, a transmission-side outer ring part, and first the transmission-side outer ring part with the bearing housing is pushed onto the partially assembled bearing and then a hub-side outer ring part is assembled.

11. Method according to one of the preceding claims, in which a lifting device is provided, with which the rotor shaft is lifted during replacement.

12. Method according to one of the preceding claims, in which a used sealing system for sealing the bearing is replaced by a new, different sealing system, in particular a labyrinth seal is replaced by a rotor shaft seal.

13. Method according to one of the preceding claims, in which a rotor lock disk is fastened to the rotor shaft and the holding device is connected to the rotor lock disk and via this to the rotor shaft.

14. Bearing arrangement, in particular of a wind turbine, which has a bearing arranged in a bearing housing, which has been replaced in particular according to the method according to one of the preceding claims, wherein the bearing housing is a used one-piece bearing housing and in which the bearing is a divided, new, replaced and double-row roller bearing roller bearing with an inner ring that is undivided in the axial direction.

15. Method for replacing a bearing of a plant, in particular for replacing a large bearing such as the main bearing of a wind turbine with
- a rotor unit having a rotor shaft extending in the axial direction to a rotor hub
- a machine carrier
- a bearing for supporting the rotor shaft, which is positioned at a predetermined bearing seat during operation
- a bearing housing surrounding the bearing, which is fastened to the machine carrier during operation
- a holding device fastened to the machine carrier for holding the rotor shaft, wherein the holding device is arranged at least partially in the region between the bearing position and the rotor hub, **characterized in that**
- a linear guide is provided, on which the bearing housing is fastenable and slidable.

## Revendications

1. Procédé de remplacement d'un palier usagé par un palier neuf, en particulier pour le remplacement d'un grand palier usagé tel que le palier principal d'une éolienne, dans lequel
- le palier usagé est disposé en fonctionnement sur un siège de palier et supporte un arbre de rotor s'étendant le long d'un axe de rotation et dans une direction axiale en direction d'un moyeu de rotor, en tant que partie d'une unité de rotor, et le palier usagé est disposé dans un logement de palier, qui est fixé à un support de machine, dans lequel
- le remplacement du palier usagé s'effectue sans démonter l'arbre de rotor, en ce que
- le logement de palier est retiré du palier usagé par déplacement axial
- le palier usagé est divisé et retiré de l'arbre de rotor,
- le nouveau palier est monté autour de l'arbre de rotor,
- le nouveau palier est à nouveau disposé dans le logement de palier après l'enlèvement de l'ancien palier, **caractérisé en ce que**
- le logement de palier est réalisé sous forme de logement de palier d'une seule pièce, non-divisé.

2. Procédé selon la revendication précédente, dans lequel le logement de palier est déplacé axialement à l'aide d'un dispositif, qui s'appuie sur le logement de palier et de préférence sur le palier usagé.

3. Procédé selon l'une des revendications précédentes, dans lequel un dispositif de support est monté, lequel supporte l'arbre de rotor pendant le remplacement, dans lequel le dispositif de support supporte l'unité de rotor, vue dans la direction axiale, de préférence après le siège de palier.

4. Procédé selon l'une des revendications précédentes, dans lequel le palier comprend plusieurs pièces rapportées choisies parmi le couvercle d'étanchéité, support d'étanchéité, bague d'écartement, écrou d'arbre, dans lequel au moins une, de préférence plusieurs de ces pièces rapportées sont déplacées axialement de manière non destructive et étant réutilisées après le remplacement du palier.

5. Procédé selon l'une des revendications précédentes, dans lequel le corps de palier est traité thermiquement pour faciliter le démontage et/ou le remontage.

6. Procédé selon l'une des revendications précédentes, dans lequel le logement de palier est retiré du palier usagé alors que le palier usagé se trouve dans le logement de palier.

7. Procédé selon l'une des revendications 1 à 7, dans lequel le roulement usagé est d'abord déplacé avec le logement de roulement le long de l'axe de rotation avant que le logement de roulement soit retiré.

8. Procédé selon l'une des revendications précédentes, dans lequel le palier comprend une bague intérieure ainsi qu'une bague extérieure et des corps de roulement disposés entre elles, dans lequel, pour le montage du nouveau palier
- selon une première variante, d'abord l'ensemble du nouveau palier est disposé autour de l'arbre de rotor et qu'ensuite le logement de palier est glissé sur l'ensemble du nouveau palier,
- selon une deuxième variante, d'abord le nouveau palier est construit seulement partiellement autour de l'arbre de rotor en tant que palier partiellement monté et ensuite le logement de palier conjointement est glissé avec un composant de palier, en particulier avec une bague extérieure, dans la direction axiale sur le palier partiellement monté.

9. Procédé selon l'une des revendications précédentes, dans lequel le roulement est un roulement à deux rangées d'éléments roulants et la bague extérieure du nouveau roulement, vue dans la direction axiale, est divisée en plusieurs parties de bague extérieure, dans lequel le nouveau roulement est d'abord partiellement assemblé et l'une des parties de bague extérieure est enfilée avec le logement de roulement sur le roulement partiellement assemblé.

10. Procédé selon la revendication précédente, dans lequel la bague extérieure comprend une partie de bague extérieure côté moyeu ainsi que, à l'opposé, une partie de bague extérieure côté engrenage, et la partie de bague extérieure côté engrenage est d'abord enfilée avec le logement de palier sur le palier partiellement monté, puis une partie de bague extérieure côté moyeu est montée.

11. Procédé selon l'une des revendications précédentes, dans lequel un dispositif de levage est prévu, au moyen duquel l'arbre du rotor est soulevé pendant le remplacement.

12. Procédé selon l'une des revendications précédentes, dans lequel un système d'étanchéité usagé pour assurer l'étanchéité du palier est remplacé par un nouveau système d'étanchéité différent, notamment un joint labyrinthe est remplacé par un joint d'arbre de rotor.

13. Procédé selon l'une des revendications précédentes, dans lequel un disque de verrouillage de rotor est fixé à l'arbre de rotor et le dispositif de support est relié au disque de verrouillage de rotor et, par l'intermédiaire de celui-ci, à l'arbre de rotor.

14. Agencement de palier, notamment d'une éolienne, comportant un palier disposé dans un logement de palier, lequel a été remplacé notamment selon le procédé selon l'une des revendications précédentes, dans lequel le logement de palier est un logement de palier usagé d'une seule pièce et dans lequel le roulement est un roulement à rouleaux à deux rangées, divisé, nouveau, remplacé, avec une bague intérieure non-divisée dans la direction axiale.

15. Dispositif pour le remplacement d'un palier d'une usine, en particulier pour le remplacement d'un grand palier tel que le palier principal d'une éolienne avec
- une unité de rotor comprenant un arbre de rotor, qui s'étend axialement jusqu'à un moyeu de rotor
- un support de machine
- un palier pour supporter l'arbre du rotor, qui est positionné, en fonctionnement, sur un siège de palier prédéterminé
- un logement de palier entourant le palier, lequel logement de palier est fixé au support de la machine pendant le fonctionnement
- un dispositif de maintien, qui est fixé au support de machine pour maintenir l'arbre de rotor, le dispositif de maintien étant disposé au moins partiellement dans la zone entre la position de palier et le moyeu de rotor, **caractérisé en ce qu'**
- un guidage linéaire, sur lequel le boîtier de palier peut être fixé et déplacé, est prévu.
